# EUROPEAN PATENT SPECIFICATION

(11) **EP 1 948 979 B1**
(45) Date of publication and mention of the grant of the patent: **21.07.2010**
(21) Application number: 05802271.6
(22) Date of filing: 08.11.2005
(51) Int. Cl.: F16H 55/56, F16H 61/662

(54) **TRANSMISSION WITH PULLEYS AND A DRIVE BELT**
GETRIEBE MIT RIEMENSCHEIBEN UND TREIBRIEMEN
TRANSMISSION PAR POULIES ET COURROIE D ENTRAINEMENT

(43) Date of publication of application: 30.07.2008
(73) Proprietor: ROBERT BOSCH GMBH, 70442 Stuttgart (DE)
(72) Inventor: VAN DER LEEST, Adrianus, Johannes, Wilhelmus, NL-5388 RX Nistelrode (NL)
(74) Representative: Plevier, Gabriel Anton Johan Maria
(86) International application number: PCT/NL2005/000782
(87) International publication number: WO 2007/055560

(56) References cited:
- DE-A1- 10 018 243
- US-A1- 2002 068 654

## Description

The present invention relates to a continuously variable transmission provided with two pulleys with essentially cone-shaped sheaves and with a drive belt, as described in the preamble of Claim 1. The design and operation of a transmission of this type are deemed to be known, for example from the international PCT publication WO-A-2004/111500, which also shows one of the known types of drive elements such as drive belts and chains. The drive belt shown in WO-A-2004/111500 is generally known as the Van Doorne pushbelt and is described in more detail, for example, in patent publication EP-A-1221563.

This pushbelt is characterised, inter alia, by a series of transverse elements, each comprising a lower body, a middle body and an upper body. The lateral side surfaces or pulley contact faces of the lower body are in this case intended for contact with the sheaves of a driving or primary pulley and those of a driven or secondary pulley of the transmission. Part of the top side of the lower body, facing the top body, i.e. a radially outwardly oriented edge thereof, forms a supporting surface for a continuous tensioning element, which is generally formed by one or more groups of a number of nested, flat, relatively thin rings made from metal. The top body of the transverse elements is located radially outside the tensioning element, while the middle body connects the lower body and top body to one another at the level of the tensioning element. The transverse elements are accommodated in the drive belt such that they can move with respect to the circumferential direction of the tensioning element.

Generally, the lower body of the transverse elements is provided with what is known as a tilting edge, namely a generally slightly rounded transition between a top side of the transverse element of virtually constant thickness and a tapering underside which extends in the front or rear surface between the pulley contact faces. The tilting edge permits a tilting or rolling movement between adjacent transverse elements, with the drive belt following a curved path over its circumferential direction, as is necessary at the location of the pulleys.

The Van Doorne pushbelt includes a number of the said transverse elements which is such that virtually the entire circumference of the tensioning element is filled with a virtually continuous series of transverse elements, which may be clamped between the sheaves of the pulleys so that a frictional force can be transmitted between them. Partly as a result of this, a driving power can be transmitted between the pulleys of the transmission, by virtue of the transverse elements advancing one another, with support and guidance from the tensioning element.

The present invention specifically relates to a transmission type wherein both the pulley contact faces of the transverse elements and the outer sheave surfaces of the pulleys that arrive into mutual contact during operation are convexly curved in the radial direction. Geometrically speaking, i.e. without any force being applied, a point contact is realised in this transmission type, rather than the -possibly discontinuous- line contact that is applied in more conventional transmission designs. As a consequence of such point contact, the contact pressure between the sheaves and the transverse elements will be relatively high when a normal force is applied therein, especially, where the belt runs at its smallest possible radius between the sheaves of the primary pulley ("Low ratio"). Such contact pressure and the stresses associated therewith may become a limiting factor in the design and/or application of the present transmission type.

In relation to a chain belt of the closest prior art document DE-A-10018243 teaches to mitigate this disadvantageous consequence of the said point contact by having the contour of the pulley sheaves, in a diameter zone thereof, deviate from its general convex, i.e. substantially cone shaped contour. Examples of such deviation provided by DE-A-10018243 are elevations and depressions relative to the said substantially cone shaped contour, such as a straight line contour. By this measure it is aimed to reduce the said contact pressure, since a less concentrated contact is realised between the transverse elements and the pulley sheaves when a clamping force is applied.

According to the invention, there is provided a continuously variable transmission having the features of claim 1.

The present invention is explained in more detail below by way of example with reference to appended figures, in which:
Figure 1, drawn in perspective, provides a schematic illustration of a continuously variable transmission with two pulleys and a drive belt according to the prior art,
Figures 2 and 3 schematically illustrate, in a cross section of a part of the transmission, the interaction between a pulley sheave and the belt in relation to a running radius of the belt on the pulley,
Figure 4 provides a magnification of a detail of the cross section of figure 3 at the location where the belt interacts with the pulley sheave at its smallest possible running radius,
Figure 5 provides the transmission detail of figure 4, however, wherein the pulley sheave is designed in accordance with the present invention.

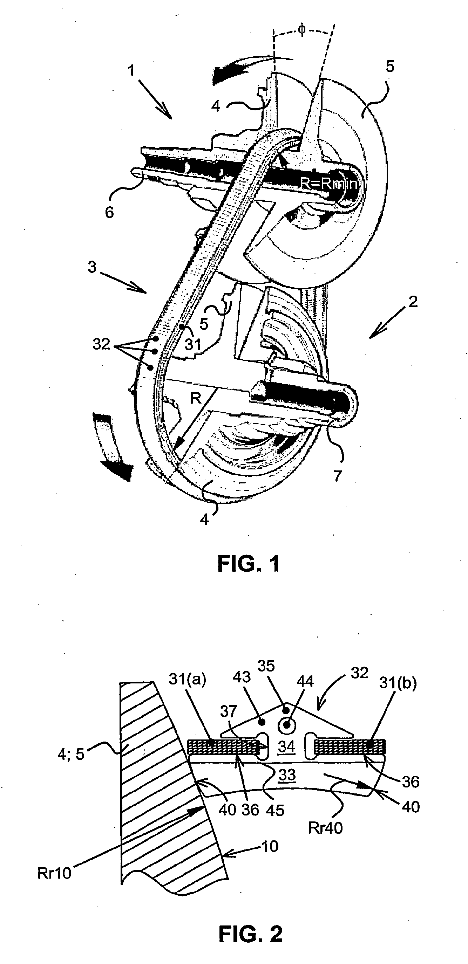

Figure 1 schematically depicts a view of the central parts of a continuously variable transmission according to the prior art. The known transmission comprises a primary pulley 1 on an input shaft 6 of the transmission, which can be driven by an engine (not shown) with a primary torque Tp and a secondary pulley 2 on an output shaft 7 of the transmission, which can drive a load (not shown) with a secondary torque Ts. Both pulleys 1, 2 are provided with a substantially conical pulley sheave 5 which is fixedly secured to the respective pulley axle 6, 7 and with a likewise substantially conical pulley sheave 4 which can be displaced in the axial direction with respect to the said axle 6, 7. A drive belt 3 is clamped between the pulley sheaves 4, 5 of each of the two pulleys 1, 2 by the respective moveable sheave 4 being urged towards the respective fixed sheave 5 by respective urging means (not shown). Between the sheaves 4, 5 of each respective pulley the drive belt 3 describes a curved path, i.e. is located at a so-called running radius R. A mechanical power can be transmitted between the two pulley axles 6, 7 with the aid of friction between the drive belt 3 and the pulleys 1, 2. Hereby, the transmission ratio is defined by the quotient between the primary pulley and secondary pulley running radii R of the drive belt 3.

The drive belt 3, which is shown in more detail in a tangentially oriented cross section through the transmission of Figure 1, is of the so-called pushbelt type, comprising a series of transverse elements 32, each composed of a lower body 33, an upper body 35 and a middle body 34 which connects the lower body 33 and the upper body 35 to one another. Part of the top side, facing towards the upper body 35, of the lower body 33, i.e. a radially outwardly oriented edge 36 thereof, on either side of the middle body 34 forms two supporting surfaces 36 for a continuous tensioning element 31, which is formed by two or more groups 31a, 31b of a number of nested flat, relative thin rings made from metal. The substantially arrowhead-shaped upper body 35 of the transverse elements 32 is located radially outside the tensioning element 31 and encloses the latter in the height direction, while the middle body 34 is located between the groups of rings 31a, 31b of the tensioning element 31. The axially laterally oriented edges 37 of the middle body in this case each form a stop surface 37 in the axial direction for a group of rings 31a, 31b.

The transverse elements 32 are held in the pushbelt 3 such that they can move with respect to the circumferential direction of the tensioning element 31. In this arrangement, one main surface of each transverse element, for example the rear surface 42, is provided with a recess (not shown), and the respective other main surface thereof, for example the front surface 43, is provided with a projection 44, the projection 44 of a transverse element 32 in each case being received in the recess of an adjacent transverse element 32. The lower body 33 of the transverse elements 32 is provided with what is known as a tilting edge 45, namely a generally slightly rounded transition between a top side of the transverse element 32 of virtually constant thickness and an effectively tapering underside thereof, which tilting edge 45 extends in the transverse direction in the front surface 43 of the transverse element 32. The tilting edge 45 permits a tilting or rolling movement between adjacent transverse elements 32, with the result that the pushbelt 3, as seen in the circumferential direction, can follow a curved path between the sheaves 4, 5 of the pulleys 1, 2.

As is also shown in figure 2 -though to a highly exaggerated extend- both the outer sheave surface 10 of the pulley sheave 4, 5 and the laterally oriented pulley contact faces 40 of the lower body 33 of the transverse element 32 are shaped with a convex curvature in radial direction, each curvature being described by a respective radius, i.e. Rr10 and Rr40. In practice, however, these two radii Rr10 and Rr40 are much larger than those shown in Figure 2 (and the further figures); they are exaggerated in the figures for the sake of clarity. In addition, in practice, contrary to the above-mentioned constant radius of curvature Rr10, Rr40, radii of curvature, which vary in the radial or height direction are also employed as long as a smoothly curved surface is defined thereby.

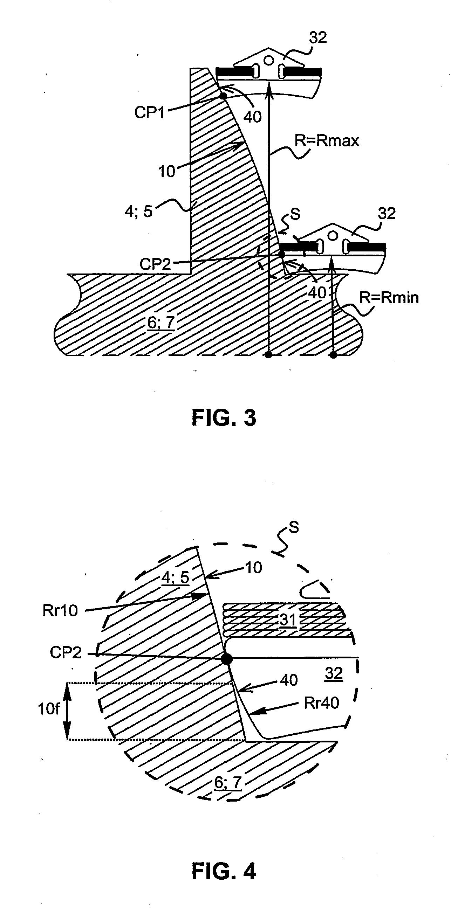

In the transmission described above, the frictional contacts between the outer sheave surfaces 10 of the respective sheaves 4, 5 of the respective pulleys 1, 2 and the respective pulley contact faces 40 of the transverse elements 32 of the drive belt 3 occur in what are known as Hertzian elliptical punctiform contacts, in which a liquid lubricant is also used in order to limit wear and/or damage to the respective frictional surfaces 10, 40 as far as possible. It may be clear, and such is illustrated in figure 3, that the geometrically determined radial location of such frictional contact on the pulley contact face 40 of the elements 32 varies with the running radius R of the belt 3. When the running radius R is largest, i.e. at Rmax, the respective contact point CP1 is located near the bottom (i.e. radially inner) side of the pulley contact face 40, whereas the respective contact point CP2 is located at or near the top (i.e. radially outer) side of the pulley contact face 40 when the running radius R is smallest, i.e. at Rmin.

This latter situation is schematically depicted in figure 4 in a magnification of a part S of figure 3 where the belt 3 is located at its smallest possible running radius Rmin. It is in this situation that the individual transverse elements 32 are subjected to the highest load, since due to the small running radius the length of the belt part (and thus the number of elements 32) that is clamped between the pulley sheaves 4, 5 is limited. Also, generally speaking, the primary torque Tp that is generated by the engine, possibly in combination with a torque converter, is highest when the transmission is in Low ratio, i.e. when the belt 3 is rotated on the primary pulley 1 at its minimum running radius Rmin.

The present invention proposes to make use of the annular radially inner section 10f of the sheave surface 10, i.e. below the punctiform Hertzian contact CP2, to favourably lower the said highest load. In the above conventional transmission such inner section 10f of the sheave surface 10 does not arrive into contact with the transverse elements 32. However, according to the invention the shape of this surface section 10f may be changed from convexly curved in radial direction, i.e. as seen in a tangential cross-section, to straight or even concavely curved, such that the surface area of the said Hertzian contact is increased and the associated contact pressure and stresses are favourably lowered.

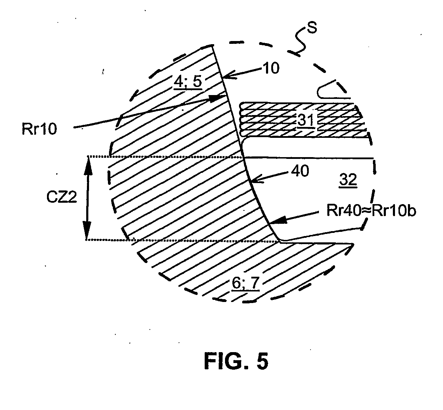

In the most preferred embodiment of the present invention, which is illustrated by figure 5, the radially inner section 10f of the sheave surface 10 is concavely curved at a radius -or radii- of curvature Rr10b that is -are- only marginally larger than the local radius -or radii- of curvature Rr40 of the pulley contact faces 40. Hereby, an appreciable contact zone CZ2 is realised between the sheaves 4,5 and the elements 32, advantageously and considerably reducing the contact pressure and associated Hertzian contact stresses.

To ensure the proper operation of the transmission, the outer sheave surface 10 including the said radially inner section 10f thereof should preferably be formed as a continuous and smooth surface. This means that the said radially inner section 10f of the sheave surface and a convexly curved radially outer section thereof should not meet at an angle, but rather should smoothly merge with corresponding coefficients of direction.

## Claims

1. Continuously variable transmission for motor vehicles, provided with a drive belt (3) and with a primary pulley (1) and a secondary pulley (2), each comprising two conically shaped pulley sheaves (4,5) placed on a respective pulley shaft (6,7) and between which the drive belt (3) is held at a variable radial position (R; Rmin; Rmax), the drive belt (3) being provided with transverse elements (32) that are moveable along a circular tensioning element(31) of the drive belt (3), the transverse elements(32) being provided with axially oriented and convexly curved pulley contact faces (40) for arriving into frictional contact with likewise convexly curved outer sheave surfaces (10) of the pulley sheaves (4, 5), **characterised in that** an annular radially inner section (10f) of the outer sheave surface (10) of the pulley sheaves (4,5) of at least one pulley (1,2) is provided with a concave contour as seen in a tangential cross section, which is concavely curved at a radius -or radii- of curvature (Rr10b) essentially matching the radius -or radii- of curvature (Rr40) of the pulley contact faces (40) of the transverse elements(32).

2. Transmission according to claim 1, **characterised in that**, in radial direction, the concavely curved inner section (10f) of the outer sheave surface (10) is defined between the respective pulley shaft (6,7) and a geometrically determined point of contact (CP2) between the respective pulley sheave (4,5) and the transverse elements (32) in the smallest possible radial position (Rmin) of the drive belt (3).

## Patentansprüche

1. Stufenloses Getriebe für Kraftfahrzeuge, das mit einem Antriebsriemen (3) und mit einer Primärriemenscheibe (1) und einer Sekundärriemenscheibe (2) versehen ist, die jeweils zwei kegelförmige Antriebsscheiben (4, 5) umfassen, die auf einer jeweiligen Riemenscheibenwelle (6, 7) platziert sind und zwischen denen der Antriebsriemen (3) in einer variablen radialen Position (R; Rmin; Rmax) gehalten wird, wobei der Antriebsriemen (3) mit Querelementen (32) versehen ist, die entlang einem kreisförmigen Spannelement (31) des Antriebsriemens (3) beweglich sind, wobei die Querelemente (32) mit axial ausgerichteten und konvex gekrümmten Riemenscheibenkontaktflächen (40) zum Gelangen in Reibkontakt mit ebenfalls konvex gekrümmten Antriebsscheibenaußenflächen (10) der Antriebsscheiben (4, 5) versehen sind, **dadurch gekennzeichnet, dass** ein ringförmiger radialer innerer Abschnitt (107) der Antriebsscheibenaußenfläche (10) der Antriebsscheiben (4, 5) mindestens einer Riemenscheibe (1, 2) mit einer konkaven Kontur, wie in einem tangentialen Querschnitt gesehen, versehen ist, die in einem Krümmungsradius oder in Krümmungsradien (Rr10b) konkav gekrümmt ist, der bzw. die dem Krümmungsradius bzw. den Krümmungsradien (Rr40) der Riemenscheibenkontaktflächen (40) der Querelemente (32) im Wesentlichen entspricht bzw. entsprechen.

2. Getriebe nach Anspruch 1, **dadurch gekennzeichnet, dass** in radialer Richtung der konkav gekrümmte innere Abschnitt (10f) der Antriebsscheibenaußenfläche (10) zwischen der jeweiligen Riemenscheibenwelle (6, 7) und einem geometrisch bestimmten Kontaktpunkt (CP2) zwischen der jeweiligen Antriebsscheibe (4, 5) und den Querelementen (32) in der kleinstmöglichen radialen Position (Rmin) des Antriebsriemens (3) definiert ist.

## Revendications

1. Transmission à variation continue pour véhicules automobiles, pourvue d'une courroie d'entraînement (3) et d'une poulie primaire (1) et d'une poulie secondaire (2), chacune comprenant deux réas (4, 5) de forme conique placés sur un arbre de poulie respectif (6, 7) et entre lesquels la courroie d'entraînement (3) est maintenue dans une position radiale variable (R ; Rₘᵢₙ ; Rₘₐₓ), la courroie d'entraînement (3) étant pourvue d'éléments transversaux (32) qui peuvent être déplacés le long d'un élément de tensionnement circulaire (31) de la courroie d'entraînement (3), les éléments transversaux (32) étant pourvus de faces de contact de poulie (40) orientées axialement et de courbure convexe, pour parvenir à un contact de friction avec des surfaces de réas externes (10) également de courbure convexe, des réas (4, 5), **caractérisée en ce qu'**une section annulaire radialement interne (10f) de la surface externe des réas (10) des réas (4, 5) d'au moins une poulie (1, 2) est pourvue d'un contour concave comme illustré en section transversale tangentielle, lequel a une courbure concave au niveau d'un rayon ou de rayons de courbure (Rr10b) essentiellement correspondant au rayon ou aux rayons de courbure (Rr40) des faces de contact de poulie (40) des éléments transversaux (32).

2. Transmission selon la revendication 1, **caractérisée en ce que**, dans la direction radiale, la section radialement interne à courbure concave (10f) de la surface externe des réas (10) est définie entre l'arbre de poulie respectif (6, 7) et un point de contact (CP2) déterminé géométriquement entre le réa respectif (4, 5) et les éléments transversaux (32) dans la position radiale (Rₘᵢₙ) la plus petite possible de la courroie d'entraînement (3).
